# EUROPEAN PATENT APPLICATION

(11) **EP 4 516 838 A1**
(43) Date of publication of application: **05.03.2025**
(21) Application number: 24194918.9
(22) Date of filing: 16.08.2024
(51) Int. Cl.: C08J 5/04, C08K 7/10

(54) **A MIXTURE FOR MANUFACTURING COMPOSITE MATERIAL AND A COMPOSITE MATERIAL OBTAINED FROM THIS MIXTURE**

(30) Priority: 28.08.2023 PL 44592123
(71) Applicant: Thermoplast Technology Prosta Spolka Akcyjna, 32-590 Libiaz (PL)
(72) Inventor: OLEKSIEWICZ, Michal, 43-600 Jaworzno (PL); DYBA, Piotr, 32-500 Chrzanow (PL)
(74) Representative: AOMB Polska Sp. z.o.o.

(57) **Abstract**

The invention relates to a mixture for producing a composite material containing a polyamide matrix material and a filler in the form of basalt fibres, a composite material obtained from this mixture. The mixture according to the invention is used to produce composite construction elements, such as technical profiles, including profiles dedicated for use in door and window joinery.

## Description

### Field of technology

The invention relates to a mixture for manufacturing a composite material containing a polyamide matrix material and a filler in the form of basalt fibres, a composite material obtained from this mixture. The mixture according to the invention is used to manufacture composite structural elements, such as technical profiles, including profiles dedicated for use in door and window joinery.

### Prior art

Polyamides are widely used as structural components for both indoor and outdoor applications, which is primarily due to their excellent mechanical properties. Compared to many other polymers, polyamides are characterized by high abrasion resistance, resistance to oils and corrosion, and the ability to self-moisturize.

In construction materials, composite materials are often used, in which the polymer matrix (including polyamide) contains a filler in the form of glass fibres, increasing the mechanical strength of the composite. Specifically, in the case of aluminium joinery and thermal breaks, polyamide PA66 (also referred to as Nylon 66, systematic name: poly[imine(1,6-dioxoohexamethylene) iminehexamethylene]) containing a filler of glass fibre at a level of 25% by weight is popularly used in composite glazing systems. Polyamide 66 has higher mechanical strength, stiffness and thermal and chemical resistance than PA6 (polycaprolactam).

Considering the two basic types of glass fibres, i.e. E-type and S-type, it is noted that due to its lower price, E-type is clearly more often used, although it has worse mechanical properties than S-type glass. Class A fibres (high-alkaline or soda-lime glass), hollow fibres, two-component fibres, highly corrosion-resistant ECR fibres, and those with exceptionally high strength, such as pure silica or pure quartz fibres, are also used. A characteristic feature of glass fibres is their high tensile strength with a relatively low Young's modulus (E), which means low stiffness. This strength depends on the diameter, and the smaller the cross-section, the better the tensile strength, while the modulus of elasticity and strength also increase. Glass fibres are fire-resistant, but their strength decreases after long-term heating, lasting about 24 hours, at a temperature of 400°C and show a rapid drop in strength above 600°C. At temperatures from 250°C to 350°C, glass fibres retain their functional properties, and temperatures below 0°C (even down to -50°C) do not have a significant effect on visible changes in their mechanical properties.

In many cases, in addition to glass fibres, particulate fillers are also used. These fillers can be used to impart colour to the moulding materials by using inorganic pigments or to introduce other specific material modifications. However, the introduction of particulate fillers into glass fibre composites usually leads to a significant reduction in mechanical properties, particularly tensile strength, impact strength and elongation at break. This means that when glass fibres are used, the use of other particulate fillers is necessarily limited to only some applications and to limited quantities of such fillers. Such restrictions apply particularly in applications where tensile strength and impact resistance are key properties of the mould produced. The introduction of particulate fillers into the glass fibre-reinforced moulding compound affects the desired pigmentation or functionality on the one hand, but on the other hand results in a reduction in mechanical properties such as tensile strength and elasticity.

One alternative to glass fibre fillers are natural mineral fibres, including basalt fibres. Basalt is a compact, extrusive igneous rock with a different chemical composition and mineral content depending on the deposit and its location. Basalt fibres with a diameter of 9-25 µm are obtained by melting the raw rock at a temperature of 1450°C and extruding through platinum sleeves. The content of iron oxides Fe₂O₃ and FeO contained in basalt affects not only the colour of the obtained fibres, but also their thermal and processing properties. The high content of iron oxides is the main feature that distinguishes basalt fibres from glass fibres, although basalt can also contain up to 20% by weight of quartz. The main advantages of basalt fibres include exceptional tensile strength, high Young's modulus, resistance to high temperatures, a wide range of working temperatures under continuous conditions, significant ability to damp vibrations, excellent acoustic insulation, high hardness and abrasion resistance. As a natural product, basalt fibres have a lower environmental impact than any synthetic fibres.

The use of basalt fibres as a mineral filler in composite materials is generally known in the art.

For example, EP 3775024 A1 discloses a fibre-filled polymer composition that includes an adhesive agent. Mineral fibres that can be used according to this publication are fibres made from natural or synthetic minerals, refractory oxides or metal oxides and include, but are not limited to, mineral wool, stone wool, basalt fibres, alumina fibres, beryllium fibres, magnesia fibres, thoria fibres, zirconium fibres, silicon carbide fibres, quartz fibres, boron fibres, asbestos fibres and high silica fibres and the like. The adhesive agent may include an epoxy resin, a polyurethane resin, a nylon resin, a polypropylene resin, a polyimide resin, a phenoxy resin, an ethylene/propylene copolymer resin with maleic anhydride or a combination thereof. The laser structuring additive comprises copper chromite (2CuO·Cr₂O₃), copper hydroxide, or combinations thereof.

EP 3659796 A1 describes a fire retardant laminate comprising one or more layers, wherein at least one layer comprises: (i) 15 wt. % to less than 50 wt. % of a thermoplastic polymer matrix comprising: a polyarylene ether with another thermoplastic material comprising a polyamide material, a polystyrene material, or a polypropylene homopolymer, or any combination thereof; and 0.5 to 15 wt. % of a phosphorus-containing fire retardant composition; and from 50 to 80 wt. % of fibres. The fibres include glass fibres, carbon fibres, aramid fibres, ceramic fibres, basalt fibres, steel fibres, thermoplastic fibres, preferably fire retardant thermoplastic fibres, or combinations thereof. This publication discloses the use of coupling agents, e.g. maleic anhydride grafted with ethylene anhydride, and a stabilizer, e.g. zinc oxide, zinc sulphide, magnesium oxide, copper iodide, potassium iodide or the like.

EP 2703436 B1 describes thermoplastic moulding compositions consisting of a thermoplastic plastic, fibre aggregates, a mass of glass fibres, additional fibre aggregates, a particulate filler material; additives. One of the components is preferably selected from the group consisting of glass fibres. A polyamide reinforced with basalt fibres can be used as the thermoplastic plastic. The polyamides are preferably selected from the following group: polyamide 46, polyamide 6, polyamide 66, polyamide 11, polyamide 12, polyamide 1212, polyamide 1010, polyamide 1012, polyamide 1112, polyamide 610, polyamide 612, polyamide 69, polyamide 810. The document discloses that advantageous impact modifiers based on olefin polymers can also be obtained by grafting an unsaturated silane compound, e.g. vinyl trimethoxysilane, vinyl triethoxysilane, vinyltriacetosilane, methacryloxypropyltrimethoxysilane or propenyltrimethoxysilane can be modified. According to the document, suitable fillers can be e.g. metal oxides such as: copper chromite, i.e. 2CuO·Cr₂O₃ (copper chromite), mixed oxides of copper, manganese and iron, and the impact modifier can be natural rubber, polybutadiene, polyisoprene, polyisobutylene, a copolymer of butadiene and/or isoprene with styrene or styrene derivatives and other comonomers, a non-polar or polar olefin homo- and copolymer obtained by grafting or copolymerization with acid anhydrides.

CN 112759922 A describes composite materials, in particular polyamide reinforced with basalt fibres and a method of producing the same. Continuous polyamide reinforced with basalt fibres consists of: 40-80 parts of polyamide, 20-60 parts of continuous basaltfibre, 2-6 parts of compatibilizer, 2-10 parts of transparent nylon, 0.1-0.3 parts of thermal stabilizer, 0.1-3 parts of liquid polyamide modifier, 0.1-0.3 parts of light stabilizer, 0.1-5 parts of nucleating agent and 0.1-5 parts of epoxy resin. The compatibilizer is a thermoplastic elastomer grafted with maleic anhydride. The thermal stabilizer is one or more of copper salts, amine antioxidants, phosphite antioxidants.

EP 2706092 B1 describes a thermoplastic moulding composition consisting of: (A) 20-88% by weight of a thermoplastic material; (B) 10-60% by weight of fibre fillers. Component A consists of a polyamide or a blend of polyamides. Component B preferably comprises selected from the group consisting of glass fibres, basalt fibres and mixtures thereof. This patent discloses metal compounds, including copper, which are particularly well suited for direct laser structuring, such as copper. The described solution includes the use of an impact modifier, which may be a grafted rubber with a cross-linked elastomeric core consisting of butadiene, isoprene or alkyl acrylates and a grafted shell made of polystyrene, a non-polar or polar olefin homo- and copolymer, such as ethylene-propylene, ethylene-propylene diene rubber and ethyleneoctene or ethylene-vinyl acetate or a non-polar or polar olefin homo- and copolymer obtained by grafting or copolymerization with acid anhydrides, (meth)acrylic acid and their esters. Additives in the form of inorganic thermal stabilizers, in particular those based on copper halides and alkali metal halides, may also be used.

US 11208555 B2 describes thermoplastic resin compositions comprising a base resin containing from about 25% by weight to about 55% by weight of a polyamide resin, from about 5 wt. % to about 25 wt. % of a polyester resin, from about 5 wt. % to about 20 wt. % of a rubber-modified aromatic vinyl graft copolymer, and from about 25 wt. % to about 50 wt. % of an inorganic filler, and about 0.1 wt. parts to about 20 wt. parts of an additive for direct laser structuring. The polyamide resin includes a polyamide 6, polyamide 66, polyamide 46 resin, and the like, and the inorganic filler includes glass fibres, talc, wollastonite, whiskers, silica, mica, and/or basalt fibres. In one embodiment, the additive for direct laser structuring purposes may include at least one selected from a complex heavy metal oxide spinel and copper salts.

EP 3502190 B1 describes a polyamide moulding composition based on a semi-crystalline, aliphatic polyamide with very good abrasion resistance and good mechanical properties. The polyamide mass comprises components A, B and C. Component A is selected from the group consisting of PA616, PA9, PA10, PA11, PA414, PA415, PA416, PA417, PA418, PA513, PA514, PA515, PA516, PA517, PA518, PA612, PA613, PA614, PA615, PA617, PA711, PA712 etc. The reinforcements of component B are selected from the group consisting of glass fibres, carbon fibres, boron fibres, aramid fibres, basalt fibres or blends of such fibres; and/or the fillers of component (B) are selected from the group consisting of talc, mica, silicate, quartz, titanium dioxide, wollastonite, kaolin, amorphous silicon dioxides, magnesium carbonate, magnesium hydroxide, chalk, calcium, feldspar, barium sulphate, solid or hollow glass spheres, frosted glass or mixtures thereof. This publication discloses the use of thermal stabilisers which are selected from the group consisting of monovalent or divalent copper compounds, e.g. salts of monovalent or divalent copper compounds with inorganic or organic acids or monovalent or divalent phenols. Viscosity modifiers such as high density ethylene modified acrylic acid, preferably with a degree of grafting in the range of 5 to 6%, may also be used. Poly(ethylene-maleic anhydride) copolymers may also be used.

CN 115785659 A describes a wear-resistant, self-lubricating and long fibre reinforced polyamide composite material. The continuous long fibres include one or a combination of glass fibres, carbon fibres, aramid fibres, metal fibres, boron fibres and basalt fibres. The self-lubricating agent includes one or a combination of polytetrafluoroethylene, molybdenum disulfide, nano-graphene and nanosphere copper powder. The compatibilizer is a compatibilizer of a polar monomer grafted polymer, wherein the polymer is at least one of polyethylene, polypropylene, polybutene; and the polar monomer is a polymerized acid anhydride monomer with a double bond, in particular comprising at least one of maleic anhydride, fumaric acid, itaconic acid, citraconic acid, citraconic anhydride and vinyl succinic anhydride. The surfactant includes one or more combinations of fatty acid amide surfactants, low molecular weight polyolefin waxes such as acidic ethylene acrylic polymers. In some specific embodiments, the continuous long fibre has been modified by surface grafting a silane coupling agent, a titanium coupling agent, or an aluminate coupling agent.

JP 5279175 B2 describes fibre reinforced thermoplastic resin compositions comprising components A and B. Component A is polyamide 6, polyamide 66. Component B comprises 16-70% by weight of basalt fibre. The composition may include a thermal stabilizer and an antioxidant including a hindered phenol, a hindered amine, a phosphite, a phosphate, a thioether, a hydrotalcite, a copper halide, potassium carbonate, and the like. Examples of the impact resistance improving agent include styrene-based elastomers, acrylic-based elastomers, and olefin-based elastomers. These agents are usually preferably modified with an epoxy resin or maleic anhydride as a compatibilizer to impart compatibility with a polyamide resin. Basalt fibre may be modified with a silane coupling agent.

JP 4848827 B2 relates to a fibre-reinforced thermoplastic composition comprising (A) a thermoplastic resin; (B) basalt fibres; (C) at least one compound selected from the group consisting of carbon black, nigrosine, and aniline carbon black. Component (A) includes, but is not limited to, polyamide 6 or polyamide 66. D9 discloses the use of polyolefins in the composition. The polyolefin used in the described embodiment is an α-olefin homopolymer, an α-olefin copolymer or an α-olefin. Specific examples of α-olefins include ethylene, propylene, butene-1, pentene-1, hexene-1, heptene-1 and octene-1. Thermal stabilizers, preferably sterically hindered phenolic compounds, phosphite compounds, thioether compounds, copper halides, potassium halides, hydrotalcite and the like, may also be used.

However, the differences between basalt fibres as a relatively new type of filler compared to glass fibres used for many years mean that there is still a constant need to provide new solutions in the selection and preparation of basalt fibres, development of optimal mixture recipes for the production of composite materials, including in particular the selection of appropriate matrix materials, optimized for both the processing technology using injection and extrusion methods as such, as well as the functional properties (primarily mechanical) of the target composite materials, at the lowest possible production costs (resulting, among others, from the energy consumption at the individual process stages). The basic goal of such activities is to obtain a composite material that provides greater stiffness to technical profiles formed from it, as well as to increase the resistance of such profiles to aging in atmospheric conditions.

### Summary of the invention

The aim of the present solution was to overcome the aforementioned problems associated with the use of plastics based on polymer matrices that contain the addition of glass fibres and in particular to produce a combination consisting of a strong polymer base such as polyamide with the use of a natural filler, in particular basalt fibre.

It surprisingly turned out that the solution according to the present invention discussed below enables to achieve this aim.

In a first aspect, the present invention relates to a mixture for the production of a composite material comprising a polyamide matrix material and a filler in the form of basalt fibres, wherein the polyamide matrix material is made of polycaprolactam (PA6) and the basalt fibres are chopped fibres.

Preferably, the polycaprolactam is selected from:
(i) granulated polycaprolactam with a density of 1.12 g/cm³, a viscosity number of 185-200 cm³/g, a relative viscosity index of 3.33 and a melting point of 220°C;
(ii) granulated polycaprolactam with a viscosity number of approx. 250, a relative viscosity index of 4.05 and a melting point of 220°C;
(iii) a mixture of components (i) and (ii) in a weight ratio of 2:1.

Preferably, the mixture according to the invention contains 20% by weight of basalt fibres.

Preferably, the mixture according to the invention contains basalt fibres with a diameter of 10 to 15 µm, especially with a diameter of 13 µm, and a length of 3.0 to 3.5 mm, especially with a length of 3.2 mm.

Preferably, the mixture according to the invention additionally contains a copper thermal stabilizer. The presence of such an additive protects against the thermal aging process, while simultaneously enhancing the composite's resistance to temperatures under load conditions.

Preferably, the mixture according to the invention additionally contains a compatibilizer selected from copolymers and terpolymers of ethylene, acrylic acid and maleic anhydride. The use of such a compatibilizer contributes to ensuring the flexibility and polarity of the composite material, and also increases the thermal stability of the composite production process. Additionally, it enhances the compatibility of additives in the composite structure.

In a second aspect, the present invention relates to a composite material produced from the mixture according to the invention defined above.

It surprisingly turned out that the use of polycaprolactam (PA6) together with chopped basalt fibre allows obtaining a composite material exhibiting fully satisfactory utility properties (including mechanical properties such as stiffness and stress transfer). Although in the previously used solutions PA66 was clearly preferred as a matrix material for forming technical profiles, mainly due to its high stiffness and tensile strength, PA6, due to its lower melting temperature (220°C, while for PA66 this value is 260°C), shows better elasticity and impact strength. Moreover, in contrast to PA66, PA6 is a material suitable for recycling. The lower melting temperature of PA6 compared to PA66 and the use of chopped basalt fibres (i.e. fibres of relatively short length) had a positive effect on the processing process, reducing the energy consumption of such steps as melting the polymer matrix or mixing the matrix with the filler. At the same time, it turned out that despite the use of such raw materials, which could be perceived as less beneficial in terms of ensuring sufficiently good mechanical properties of the composite, including in particular stiffness and tensile strength (compared to e.g. PA66 or basalt fibres obtained in the roving process). In such a matrix-filling system it was possible to optimize the transfer of external stresses through the technical profiles.

Regardless of the above, the replacement of the currently most common solutions based on the use of glass fibre as a filler had a positive effect on the improvement of the stiffness of the produced profiles. Currently used glass fibres are characterized by a Young's modulus (E) of 5500 MPa, while basalt fibres on average have an E modulus value 600-1000 MPa higher. Such a change contributes to the increased resistance of the profiles to aging under the influence of weather conditions, and also reduces the wear of processing tools. Such a change allows the use of technical profiles made of the new material. These profiles can be used as thermal elements in aluminium joinery and in other technical profiles. This in turn contributes to the increased resistance of these profiles to mechanical and temperature loads.

In the mixtures according to the invention, additives such as compatibilizers, adhesion promoters, flow modifiers, impact modifiers, thermal stabilizers, antioxidants and slip additives can be used, depending on the specific purpose of the target composite technical profiles or the specific technology of their production.

The material according to the invention is suitable for extrusion and/or injection processes.

In addition to the main application of the composite materials according to the present invention in the field of door and window joinery and thermal spacers for aluminium profiles (i.e. in facade systems, window and door systems or sliding door systems), other fields in which the materials according to the invention can be used include construction (extruded scaffolding elements, reinforcements, replacements for glass fibre rods), automotive (collectors, covers, inlet grilles, structural reinforcement elements), machine and device construction (machine part housings, gear wheels, bearings, frame structural elements), electrical engineering (electrical connectors, power tool housings), sports and rehabilitation equipment (ski equipment elements, buckles, etc.)

### Examples

The chopped basalt fibres used in the examples were subjected to a prior silanization process, i.e. treatment of the material surface with organosilanes, which improves their wettability and mechanical properties. Because of that, they can be used in a continuous temperature range from -250°C to 550°C. Additionally, basalt fibres prepared in this way show high resistance to UV radiation, marked as > 7, which makes them suitable for the compounding process.

### Example 1 - mixture

The mixture for the production of composite material contains granulated polycaprolactam PA6 suitable for compounding, with a density of 1.12 g/cm³, a viscosity number of 185-200 cm³/g, a relative viscosity index of 3.33 and a melting point of 220°C, and chopped basaltfibres with a diameter of 13 µm and a length of 3.2 mm in the amount of 20% by weight of PA6.

A commercially available copper thermal stabilizer and a compatibilizer consisting of a mixture of copolymers and terpolymers of ethylene, acrylic acid and maleic anhydride were added to the mixture prepared in this way.

### Example 2 - mixture

The mixture for the production of composite material contains granulated polycaprolactam PA6 suitable for extrusion, with a viscosity number of approx. 250, a relative viscosity index of 4.05 and a melting point of 220°C, and chopped basalt fibres with a diameter of 13 µm and a length of 3.2 mm in the amount of 20% by weight relative to PA6.

A commercially available copper thermal stabilizer and a compatibilizer consisting of a mixture of copolymers and terpolymers of ethylene, acrylic acid and maleic anhydride were added to the mixture prepared in this way.

### Example 3 - mixture

A mixture for the production of a composite material comprises:
(i) granular polycaprolactam PA6 suitable for compounding, having a density of 1.12 g/cm³, a viscosity number of 185-200 cm³/g, a relative viscosity index of 3.33 and a melting point of 220°C;
(ii) granular polycaprolactam PA6 suitable for extrusion, having a viscosity number of about 250, a relative viscosity index of 4.05 and a melting point of 220°C; and
(iii) chopped basalt fibres with a diameter of 13 µm and a length of 3.2 mm in an amount of 20% by weight based on the total weight of components (i) and (ii);
wherein components (i) and (ii) are contained in the mixture in a weight ratio of 2:1.

A commercially available copper thermal stabilizer and a compatibilizer consisting of a mixture of ethylene, acrylic acid and maleic anhydride copolymers and terpolymers were added to the mixture prepared in this way.

### Example 4 - mechanical and thermal testing

The mixtures from examples 1-3 were tested in the process of forming the composite material. A mixture (a compound) of PA66 polyamide with glass fibre was used as a reference sample, with the glass fibre content in this mixture being 25% by weight of the polyamide matrix. The following parameters were checked during the tests:
a) general parameters of the mixtures (including the distribution of filling in the matrix);
b) mechanical, thermal and mechanical-thermal parameters of profile samples produced from the tested mixtures; profiles from the mixtures according to examples 1-5 were obtained in the form of injection mouldings;
e) mechanical, thermal and mechanical-thermal parameters of flat and chamber profiles obtained from the tested mixtures, produced by extrusion;
f) ageing by UV radiation in conditions without and with aluminium of flat and chamber profiles obtained as in point e) above.

Based on the general, mechanical and thermal research results, conducted both in the laboratory and on a semi-industrial scale, it was possible to transform the technology into an industrial scale. As a result, the designed material was produced: a mixture (compound) containing polycaprolactam (PA6) with a filler of cut basalt fibre in the amount of 20% by weight of the matrix material. Extrusion technology was also developed and during the research, the processing parameters were refined, resulting in the extrusion of the material on specially designed tools, creating finished profiles of technical thermal breaks, both flat and chambered.

Early tests carried out on profiles obtained from the developed mixture = PA BF compound (polyamide PA6 - cut basalt fibre), carried out in real use conditions, brought positive results. The strength and impact properties are at a satisfactory level, and the obtained thermal properties (slightly lower melting temperature) do not affect the transition of the process in real conditions. The PA BF flat and chambered spacer profiles successfully passed the aluminium crimping process, as well as the prototype painting and anodizing stages in the normal production cycle. These positive results were confirmed by Yawal S.A. company.

## Claims

1. A mixture for producing a composite material comprising a polyamide matrix material and a filler in the form of basalt fibres, **characterized in that** the polyamide matrix material is made of polycaprolactam (PA6) and the basalt fibres are chopped fibres.

2. The mixture according to claim 1, **characterized in that** the polycaprolactam is selected from:
(i) granulated polycaprolactam with a density of 1.12 g/cm³, a viscosity number of 185-200 cm³/g, a relative viscosity index of 3.33 and a melting point of 220°C;
(ii) granulated polycaprolactam with a viscosity number of approx. 250, a relative viscosity index of 4.05 and a melting point of 220°C;
(iii) a mixture of components (i) and (ii) in a weight ratio of 2:1.

3. The mixture according to claim 1 or 2, **characterized in that** it contains 20% by weight of basalt fibres.

4. The mixture according to claim 1 to 3, **characterized in that** it contains basalt fibres with a diameter of 10 to 15 µm and a length of 3.0 to 3.5 mm.

5. The mixture according to claim 4, **characterized in that** it contains basalt fibres with a diameter of 13 µm and a length of 3.2 mm.

6. The mixture according to one of claims 1 to 5, **characterized in that** it additionally contains a copper thermal stabilizer.

7. The mixture according to one of claims 1 to 6, **characterized in that** it additionally contains a compatibilizer consisting of a mixture of copolymers and terpolymers of ethylene, acrylic acid and maleic anhydride.

8. The composite material made from the mixture defined in one of claims 1 to 7.
